(19) **Europäisches Patentamt**
**European Patent Office**
**Office européen des brevets**

(11) **EP 4 439 947 B1**

(12) **EUROPEAN PATENT SPECIFICATION**

(45) Date of publication and mention
of the grant of the patent:
**03.12.2025 Bulletin 2025/49**

(21) Application number: **24166032.3**

(22) Date of filing: **25.03.2024**

(51) International Patent Classification (IPC):
*H02M 1/00* (2006.01)        *H02M 1/32* (2007.01)
*H02M 3/00* (2006.01)        *H02M 3/335* (2006.01)
*H02M 7/483* (2007.01)       *H02M 7/487* (2007.01)
*H02M 7/49* (2007.01)        *H02J 3/01* (2006.01)
*H02J 3/12* (2006.01)        *H02J 3/38* (2006.01)

(52) Cooperative Patent Classification (CPC):
**H02M 1/325; H02J 3/01; H02J 3/12; H02J 3/381;**
**H02M 1/007; H02M 1/0077; H02M 3/01;**
**H02M 3/33573; H02M 7/4837; H02M 7/487;**
**H02M 7/49;** H02J 2300/24; Y02E 10/56

(54) **CONTROL METHOD FOR CASCADED H-BRIDGE MEDIUM-VOLTAGE DIRECT-MOUNTED PHOTOVOLTAIC INVERTER**

STEUERUNGSVERFAHREN FÜR KASKADIERTEN
H-BRÜCKEN-MITTELSPANNUNGS-DIREKTMONTIERTEN PHOTOVOLTAIKWECHSELRICHTER

PROCÉDÉ DE COMMANDE POUR ONDULEUR PHOTOVOLTAÏQUE À MOYENNE TENSION
MONTÉ EN CONTINU À PONT EN H EN CASCADE

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**

(30) Priority: **27.03.2023 CN 202310300430**

(43) Date of publication of application:
**02.10.2024 Bulletin 2024/40**

(73) Proprietors:
• **Guangzhou Metro Design and Research Institute Co., Ltd.**
**Guangzhou, Guangdong 510000 (CN)**
• **Qingdao University**
**Qingdao Shandong 266071 (CN)**

(72) Inventors:
• **Lin, Shan**
**Guangzhou, 510000 (CN)**
• **Nong, Xingzhong**
**Guangzhou, 510000 (CN)**
• **Zhao, Tao**
**Guangzhou, 510000 (CN)**
• **Liao, Jing**
**Guangzhou, 510000 (CN)**
• **Lu, Yun**
**Guangzhou, 510000 (CN)**
• **Wang, Chunfang**
**Guangzhou, 510000 (CN)**

(74) Representative: **Murgitroyd & Company**
**165-169 Scotland Street**
**Glasgow G5 8PL (GB)**

(56) References cited:
• **ZHAO TAO ET AL: "Active Power Backflow Suppression Strategy of Cascaded PV Solid-State Transformer Under Interphase Short-Circuit Fault Condition", IEEE JOURNAL OF EMERGING AND SELECTED TOPICS IN POWER ELECTRONICS, IEEE, PISCATAWAY, NJ, USA, vol. 11, no. 2, 12 January 2023 (2023-01-12), pages 2350 - 2363, XP011937942, ISSN: 2168-6777, [retrieved on 20230112], DOI: 10.1109/ JESTPE.2023.3234304**

EP 4 439 947 B1

## Description

### TECHNICAL FIELD

The present invention relates to the field of photovoltaic power generation technologies, and in particular to a control method for a cascaded H-bridge medium-voltage direct-mounted photovoltaic inverter.

### BACKGROUND ART

With the increasing connection of photovoltaic power stations to the power system, medium- and large-scale photovoltaic grid-connected inverters are required to have the low voltage ride through (LVRT) capability in China and abroad. That is, during the voltage sag of the power grid, a photovoltaic power station needs injection of a reactive current in certain proportion to the voltage sag so as to support the voltage of the power grid, and the remaining capacity is emitted in the form of active power to prevent the power grid from a large active power deficit which may otherwise in turn affect the frequency stability of the system. Traditional power frequency transformers have the disadvantages of large volume and weight, high no-load loss at night, large reactive power loss or the like, and moreover, the inherent resonance of LCL filters has a serious impact on the robust operation of photovoltaic power generation systems. In particular, with the high-proportion connection of large-capacity new-energy converters to the power grid, the grid impedance and series-parallel resonance at the point of common coupling affect the stable operation of the grid-connected inverters.

To solve these problems, one way is to use a three-phase isolated medium-voltage direct-mounted photovoltaic grid-connected inverter based on a cascaded H-bridge (CHB) topology, whereby a modular structure allows for expanding the system to higher voltage and power levels by using low-voltage devices, such that the entire photovoltaic power station can be connected to a medium-voltage power grid with only a single or even a small number of converters. As such, the bulky power-frequency transformers are no longer needed due to the electric isolation that has been provided by the high-frequency transformer at a previous stage. In addition, the multi-level output voltage allows the H-bridge to operate at a lower switching frequency, which is advantageous for improving the efficiency and achieving high-quality grid-connected current with smaller filters, providing better system stability in complex power grid conditions, compared to LCL filters. Therefore, this three-phase isolated medium-voltage direct-mounted photovoltaic grid-connected inverter based on CHB topology exhibits great development prospects and market potential. However, unlike the traditional three-phase inverter, the CHB-based photovoltaic inverter has a relatively special topological structure, and the converter has a unique problem of active power backflow occurring during LVRT, on the premise of a fault of three-phase grid voltage asymmetry. Specifically, one phase of the converter absorbs active power from the power grid (the other two phases emit active power to the power grid), leading to the loss of a balance operation point of the system during the fault, such that an H-bridge (HB) direct-current (DC) bus voltage continues to rise, and the inverter is finally shut down and disconnected from the grid due to an over-voltage fault. Therefore, there is a need to suppress the active power backflow for the three-phase CHB photovoltaic inverter during the voltage sag of the power grid, which is also a requisite for implementing LVRT.

At present, the studies on the LVRT control strategy of the three-phase CHB photovoltaic grid-connected inverter have been reported in many documents. The inherent problem existing in the three-phase isolated CHB during LVRT, i.e., the mechanism of active power backflow, is presented by T. Zhao, and D. Chen in "Analysis and suppression of active power backflow of three-phase common dc-bus cascaded H-bridge PV grid-connected inverter during LVRT", IEEE Journal of Emerging and Selected Topics in Power Electronics, vol. 10, no. 1, pp. 745-759, Feb. 2022, whereby the relationship between active current and reactive current under different fault conditions and at different voltage sag depths are deduced at the same time, and an active current injection strategy is proposed. However, in cloudy and rainy days, evenings, early mornings and other conditions with low sunlight intensity, the problem of active power backflow remains due to insufficient active current transmitted by the inverter to the power grid.

An LVRT control strategy for cascaded photovoltaic solid-state transformers based on zero-sequence voltage compensation is proposed by T. Zhao, and D. Chen in "Active power backflow control strategy for cascaded photovoltaic solid-state transformer during low voltage ride through", IEEE Trans. Ind. Electron., vol. 69, no. 1, pp. 440-451, Jan. 2022". This strategy compensates for the zero-sequence voltage as appropriate to offset the interphase distribution of active power of the three-phase converter caused by a negative-sequence voltage, thereby suppressing the active power backflow. Although there is no requirement for the active current, zero-sequence voltage compensation would lead to the problem of over-modulation to weaken the effect of zero-sequence voltage compensation when a single-phase short-circuit or an interphase short-circuit between two phases occurs to the system. Therefore, the system is still at the risk of active power backflow, which, however, is unfortunately not discussed in detail in this paper.

A combined modulation method and principle based on active current injection and zero-sequence volage compensation are proposed by T. Zhao, Z. Feng, M. Wang, M. Wu, and D. Chen in "An optimized LVRT control strategy of cascaded modular medium-voltage inverter for large-scale PV power plant", IEEE Journal of Emerging and Selected Topics in Power Electronics, early access, 2022. This method can completely suppress the active power backflow in the case of a single-phase short-circuit fault and a two-phase short-circuit fault. For the interphase short-circuit between two phases, an adaptive zero-sequence voltage compensation strategy is proposed, which, however, still has a large range out of control.

A Chinese patent CN115360920A discloses a positive- and negative-sequence maximum-minimum harmonic zero-sequence voltage injection method for a cascaded converter, in which an adaptive fundamental-frequency zero-sequence voltage and positive- and negative-sequence maximum-minimum harmonic zero sequence voltages need to be calculated respectively, and then injected into an inverter at the same time. The technical solution of this method has complex steps and is not applicable to conditions with high voltage sag depth and low system output power.

Non-patent literature document titled:

"Active Power Backflow Suppression Strategy of Cascaded PV Solid-State Transformer Under Interphase Short-Circuit Fault Condition", by ZHAO TAO ET AL, IEEE JOURNAL OF EMERGING AND SELECTED TOPICS IN POWER ELECTRONICS, IEEE, PISCATAWAY, NJ, USA, vol. 11, no. 2, 12 January 2023 (2023-01-12), pages 2350-2363, XP011937942,ISSN: 2168-6777, DOI: 10.1109/JESTPE.2023.3234304,

discloses an active power backflow suppression method applied in a cascaded solid-state transformer under an interphase short-circuit fault condition based on an adaptive zero-sequence voltage and an harmonic zero-sequence voltage.

In summary, there are still problems in the existing control methods for suppressing the active power backflow of the three-phase common DC bus CHB under the condition of LVRT. That is, when the interphase short-circuit fault between two phases occurs to the power grid, the existing strategies of both active current injection and adaptive zero-sequence voltage compensation cannot effectively suppress the active power backflow, and other additional control methods must be adopted.

## SUMMARY OF THE INVENTION

In view of the defects in the prior art, an object of the present invention is to provide a control method for a cascaded H-bridge medium-voltage direct-mounted photovoltaic inverter. When an interphase short-circuit between two phases occurs to a power grid, the control method can further reduce the range of active power backflow of a three-phase isolated common DC bus CHB direct-mounted photovoltaic grid-connected inverter, to allow a current transformer to stably operate in cases of low output power and small sag depth, thereby improving the LVRT capability of a photovoltaic power generation system.

To achieve the object above, the present invention employs the following technical solution:

a control method for a cascaded H-bridge medium-voltage direct-mounted photovoltaic inverter includes the steps of:

S1, determining two phases of a power grid where a short circuit occurs;

S2, calculating a desired adaptive zero-sequence voltage $u_{0FA}$ of a phase A to be compensated by means of an adaptive zero-sequence voltage compensation strategy, wherein the phase A refers to a phase of three phases of the power grid where no short circuit occurs, and the other two phases include a phase B and a phase C, between which an interphase short circuit occurs, wherein the adaptive zero-sequence voltage is calculated based on a voltage sag depth caused by the interphase short circuit;

S3, compensating for the adaptive zero-sequence voltage $u_{0FA}$, then calculating an amplitude of a modulation voltage of the phase A, and calculating the modulation voltage of the phase A based on the amplitude of the modulation voltage of the phase A;

S4, expanding the modulation voltage of the phase A to symmetrical three-phase voltages based on the modulation voltage of the phase A;

S5, calculating a harmonic zero-sequence voltage $u_{0HA}$ by means of a maximum-minimum harmonic zero-sequence voltage compensation strategy, wherein the zero-sequence compensated modulation voltage of phase A is expanded to symmetric three-phase voltages and decomposed into positive- and negative-sequence components of which their maximums and minimums are found as harmonic zero-sequence voltages and applied in said maximum-minimum harmonic zero-sequence compensation; ; and

S6, acquiring three-phase modulation voltages $u_{cAH}^*$, $u_{cBH}^*$ and $u_{cCH}^*$ based on the adaptive zero-sequence voltage $u_{0FA}$ and the harmonic zero-sequence voltage $u_{0HA}$, to suppress active power backflow.

Further, a calculation formula for calculating the adaptive zero-sequence voltage $u_{0FA}$ of the phase A is specifically:

$$u_{0FA} = q\frac{1-D}{2}\mathrm{U}_g cos(\omega t + 2\varphi - \pi)$$

,

wherein q indicates an adaptive compensation coefficient, D indicates the sag depth of a voltage of the power grid, $\mathrm{U}_g$ indicates a rated amplitude of a phase voltage of the power grid, $\varphi$ indicates a power factor angle of the inverter during LVRT, $\omega$ indicates an angular frequency of the voltage of the power grid, and t indicates time.

Further, a calculation formula for the amplitude of the modulation voltage of the phase A is specifically:

$$\mathrm{U}_{cAM} = \mathrm{U}_g\sqrt{1 + \left(q\frac{1-D}{2}\right)^2 - 2q\frac{1-D}{2}\cos(2\varphi)}$$

,

wherein $\mathrm{U}_{cAM}$ indicates the amplitude of the modulation voltage of the phase A.

Further, a calculation formula for the modulation voltage of the phase A is specifically:

$$u_{cA}^* = \mathrm{U}_{cAM}\cos(\omega t - \alpha_A) = \mathrm{U}_g\sqrt{1 + \left(q\frac{1-D}{2}\right)^2 - 2q\frac{1-D}{2}\cos(2\varphi)}\cos(\omega t - \alpha)$$

,

wherein $u_{cA}$ indicates the modulation voltage of the phase A, and $\alpha_A$ indicates an included angle $\alpha$ between a modulation voltage phasor $\mathrm{U}_{cA}^*$ of the phase A and a pre-modulation voltage phasor $\mathrm{U}_gA$ of the phase A after the adaptive zero-sequence voltage is compensated.

Further, a calculation formula for $\alpha$ is:

$$\alpha \approx \arccos\left(\frac{\mathrm{U}_g^2 + \mathrm{U}_{cAM}^2 - \mathrm{U}_{0FM}^2}{2\mathrm{U}_g\mathrm{U}_{cAM}}\right) = \arccos\left(\frac{2 - q(1-D)\cos(2\varphi)}{\sqrt{4 + q^2(1-D)^2 - 4q(1-D)\cos(2\varphi)}}\right)$$

,

wherein $\mathrm{U}_{0Fm}$ indicates an amplitude of the adaptive zero-sequence voltage $u_{0FA}$,

$$\mathrm{U}_{0FM} = q\frac{1-D}{2}\mathrm{U}_g$$

.

Further, calculation formulas for expanding the modulation voltage of the phase A to the three-phase symmetric voltages are:

$$\begin{cases} u_{cA1}^* = \mathrm{U}_g\sqrt{1 + \left(q\frac{1-D}{2}\right)^2 - 2q\frac{1-D}{2}\cos(2\varphi)}\cos(\omega t - \alpha) \\[2mm] u_{cA2}^* = \mathrm{U}_g\sqrt{1 + \left(q\frac{1-D}{2}\right)^2 - 2q\frac{1-D}{2}\cos(2\varphi)}\cos\left(\omega t - \frac{2\pi}{3} - \alpha\right) \\[2mm] u_{cA3}^* = \mathrm{U}_g\sqrt{1 + \left(q\frac{1-D}{2}\right)^2 - 2q\frac{1-D}{2}\cos(2\varphi)}\cos\left(\omega t + \frac{2\pi}{3} - \alpha\right) \end{cases}$$

.

Further, a calculation formula for calculating the harmonic zero-sequence voltage $u_{0HA}$ is:

$$u_{0HA} = -\frac{\max\left\{u_{cA1}^*, u_{cA2}^*, u_{cA3}^*\right\} + \min\left\{u_{cA1}^*, u_{cA2}^*, u_{cA3}^*\right\}}{2},$$

wherein $\max\{u_{cA1}^*, u_{cA2}^*, u_{cA3}^*\}$ indicates maximums of $u_{cA1}^*$, $u_{cA2}^*$, and $u_{cA3}^*$, and $\min\{u_{cA1}^*, u_{cA2}^*, u_{cA3}^*\}$ indicates minimums of $u_{cA1}^*$, $u_{cA2}^*$, and $u_{cA3}^*$.

Further, calculation formulas for the three-phase modulation voltages $u_{cAH}^*$, $u_{cBH}^*$ and $u_{cCH}^*$ are:

$$\begin{cases} u_{cAH}^* = u_{cA}^* + u_{0HA} = u_{cA} + u_{0FA} + u_{0HA} \\ u_{cBH}^* = u_{cB}^* + u_{0HA} = u_{cB} + u_{0FA} + u_{0HA} \\ u_{cCH}^* = u_{cC}^* + u_{0HA} = u_{cC} + u_{0FA} + u_{0HA} \end{cases},$$

wherein $u_{cA}$, $u_{cB}$, and $u_{cC}$ indicate three-phase modulation voltages before the adaptive zero-sequence voltage is compensated.

The present invention has the following advantageous effects.

The present invention overcomes the limitations of existing technical solutions and proposes a control method for a cascaded H-bridge medium-voltage direct-mounted photovoltaic inverter; the proposed control strategy is directed to the active power backflow occurring during the interphase short circuit between two phases in a power grid, and an adaptive zero-sequence voltage compensation strategy and a maximum-minimum harmonic zero-sequence voltage compensation strategy are combined to further reduce the range of active power backflow during the interphase short circuit between two phases in the power grid. Compared with the prior art, the proposed adaptive zero-sequence voltage compensation strategy can reduce the range of active power backflow by 75% and significantly reduce a region with the active power backflow; and the present invention is more applicable to a short-circuit condition with higher voltage sag depth and lower system output power.

## BRIEF DESCRIPTION OF THE DRAWINGS

The accompanying drawings that constitute a part of the present application are intended to provide further understanding of the present invention, and the schematic embodiments and descriptions thereof in the present invention are intended to explain the present application, and are not intended to improperly limit the present invention. In the accompanying drawings:

FIG. 1 shows a structural diagram of a three-phase isolated common DC bus CHB medium-voltage direct-mounted photovoltaic grid-connected inverter according to the present invention;
FIG. 2 shows a phasor diagram after an adaptive zero-sequence voltage is compensated due to an interphase short circuit fault between a phase B and a phase C of the inverter according to the present invention;
FIG. 3 shows output waveforms of voltage of individual phases when a control method for a cascaded H-bridge medium-voltage direct-mounted photovoltaic inverter according to the present invention is applied;
FIG. 4 shows a comparison chart of the range of active power backflow between an existing adaptive zero-sequence voltage compensation strategy and the present invention;
FIG. 5 shows a comparison chart of the range of active power backflow between a positive- and negative-sequence maximum-minimum harmonic zero-sequence voltage injection method of an existing cascaded converter and the present invention; and
FIG. 6 shows a flowchart of zero-sequence voltage compensation according to the present invention.

## DETAILED DESCRIPTION

It should be noted that the embodiments and the features in the embodiments in the present application can be combined when there is no conflict therebetween. The present invention will be described in detail by reference to the drawings together with the embodiments.

To enable those skilled in the art to better understand the solutions of the present invention, the technical solutions in the embodiments of the present invention are described clearly and completely below in combination with the accompanying drawings for the embodiments of the present invention. Apparently, the described embodiments are only a part of embodiments of the present application, rather than all embodiments of the present disclosure. All other embodiments acquired by persons skilled in the art based on the embodiments of the present invention without creative work shall fall within the scope of the present invention.

It should be noted that the terms "first", "second" and the like in the description and claims as well as in the accompanying drawings of the present invention are used to distinguish similar objects, but are not necessarily used to describe a specific order or temporal order. It should be understood that data used in this way can be interchanged where appropriate, so that the embodiments of the present invention described herein can be practiced in a sequence other than those illustrated or described herein. In addition, the terms "including" and "having" and any variations thereof in the embodiments of the present invention are intended to mean non-exclusive inclusion; for example, a process, method, system, product or device that includes a series of steps or units is not necessarily limited to those explicitly listed, but may include other steps or units not explicitly listed or inherent to these processes, methods, products or devices.

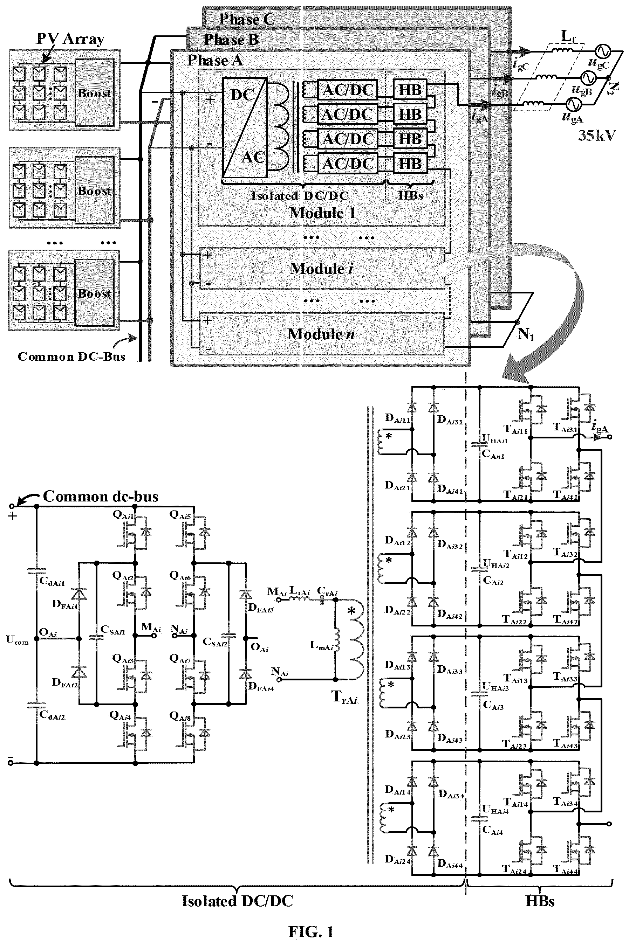

The inverter mentioned in the present invention refers to a three-phase isolated common DC bus CHB direct-mounted photovoltaic grid-connected inverter. As shown in FIG. 1, the inverter includes a phase A, a phase B and a phase C, each of which consists of n modules having the same circuit structure, with n being a positive integer. Each module consists of four HBs connected by a single-input four-output three-level LLC converter, for the purpose of simplifying a system communication design and improving the power density and efficiency. The input terminals of all the modules are connected in parallel to form a common DC bus, which connects a plurality of Boost converters to achieve multiple maximum power point tracking (MPPT) for a photovoltaic array. After alternating-current output terminals of all the modules in each of the phases A, B and C are cascaded, one terminals of the modules are connected together to form a common point N1, and the other terminals of the modules are connected to a star-connected power grid by means of a filtering inductor $L_f$. With such a modular structure, the entire photovoltaic power station can be connected to a medium-voltage power grid (35 kV) by using low-voltage devices (1200 V) commonly found in the market, and the bulky power frequency boosting transformer is thus omitted. Furthermore, the multi-level output voltage allows the HBs to operate at a lower switching frequency, which is conducive to improving the conversion efficiency and achieving high-quality grid-connected current by using smaller filtering inductors.

In FIG. 1, $u_{gA}$, $u_{gB}$, and $u_{gC}$ indicate the phase voltages at a point of common coupling; $i_{gA}$, $i_{gB}$, and $i_{gC}$ indicate the output currents of the inverter, and also the three-phase currents flowing into the point of common coupling; $U_{com}$ indicates the voltage of a common DC bus voltage; and $U_{HAij}$ indicates the DC bus capacitive voltage of j HBs of the $i^{th}$ module of the phase A.

The above structure has the feature that active power backflow would be caused in the case of an asymmetric fault in the power grid. However, the LLC converter only allows the power to flow in a single phase, resulting in that the DC bus voltage of the H-bridge continues to rise, and the inverter is finally disconnected from the grid due to overvoltage protection. As the active power backflow cannot be effectively suppressed in the case of an interphase short circuit fault according to the existing literature, the present invention focuses on the analysis of the interphase short circuit between two phases in the power grid.

Embodiment 1 (taking an interphase short circuit fault between phases B and C as an example)

When the interphase short circuit fault occurs between the phases B and C, only the phase A has the risk of over-modulation, and thus, the phase A is analyzed with emphasis.

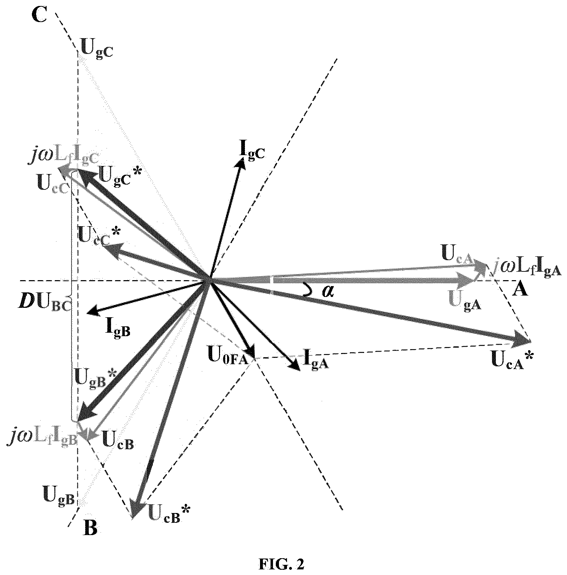

According to the adaptive zero-sequence voltage compensation strategy, an adaptive zero-sequence voltage is compensated due to an interphase short circuit fault between the phase B and the phase C of the inverter, with a phasor diagram shown as in FIG. 2.

Here, $U_{gA}$, $U_{gB}$, and $U_{gC}$ indicate the phasor forms of $u_{gA}$, $u_{gB}$, and $u_{gC}$, respectively; $I_{gA}$, $I_{gB}$, and $I_{gC}$ indicate the phasor forms of $i_{gA}$, $i_{gB}$, and $i_{gC}$, respectively; $u_{cA}$, $u_{cB}$, and $U_{cC}$ indicate the phasor forms of the modulation voltages $u_{cA}$, $u_{cB}$, and $u_{cC}$, respectively, before the adaptive zero-sequence voltage is compensated; $U_{cA}^*$, $U_{cB*}$, and $U_{cC*}$ indicate the phasor forms of the modulation voltages $u_{cA}^*$, $u_{cB}^*$, and $u_{cC}^*$, respectively, after the adaptive zero-sequence voltage is compensated; $u_{0FA}$ indicates the phasor form of the adaptive zero-sequence voltage $u_{0FA}$; D indicates the voltage sag depth of the power grid; $L_f$ indicates the filter inductance; and $\omega$ indicates the angular frequency of the voltage of the power grid.

The adaptive zero-sequence voltage compensation strategy and the maximum-minimum harmonic zero-sequence voltage compensation strategy are combined to further reduce the active power backflow range during the interphase short circuit between the phases B and C in the power grid, with a process specifically as follows.

For the phase A, the desired adaptive fundamental-frequency zero-sequence voltage $u_{0FA}$ is compensated. The desired adaptive zero-sequence voltage $u_{0FA}$ to be compensated is expressed as:

$$u_{0FA} = q\frac{1-D}{2}U_g cos(\omega t + 2\varphi - \pi) \tag{1}.$$

Here, q indicates an adaptive compensation coefficient, $U_g$ indicates a rated amplitude of a phase voltage of the power grid, and $\varphi$ indicates a power factor angle of the inverter during LVRT.

On this basis, the included angle $\alpha$ between the amplitude $U_{cAM}$, phasor $U_{cA}{}^*$ and $U_{gA}$ of the modulation voltage of the phase A may be approximated as:

$$U_{cAM} = U_g\sqrt{1 + \left(q\frac{1-D}{2}\right)^2 - 2q\frac{1-D}{2}\cos(2\varphi)} \tag{2},$$

and

$$\alpha \approx \arccos\left(\frac{U_g^2 + U_{cAM}^2 - U_{0FM}^2}{2U_g U_{cAM}}\right) = \arccos\left(\frac{2 - q(1-D)\cos(2\varphi)}{\sqrt{4 + q^2(1-D)^2 - 4q(1-D)\cos(2\varphi)}}\right) \tag{3}.$$

Here, $U_{0FM}$ indicates the amplitude of the adaptive zero-sequence voltage $u_{0FA}$, and is expressed as:

$$U_{0FM} = q\frac{1-D}{2}U_g \tag{4}.$$

Therefore, after the adaptive zero-sequence voltage $u_{0FA}$ is compensated, the modulation voltage of phase A is expressed as:

$$u_{cA}^* = U_{cAM}\cos(\omega t - \alpha_A) = U_g\sqrt{1 + \left(q\frac{1-D}{2}\right)^2 - 2q\frac{1-D}{2}\cos(2\varphi)}\cos(\omega t - \alpha) \tag{5}.$$

There is a risk of overmodulation since only the amplitude of the modulation voltage of the phase A increases significantly after the adaptive zero-sequence voltage is compensated. Therefore, the modulation voltage of the phase A is expanded to symmetric three-phase voltages.

Specifically, after the adaptive zero-sequence voltage is compensated, the phase A is taken as a new state, and on this basis, the three-phase voltage is reconstructed (that is, on the basis of the modulation voltage of the phase A after the compensation, the phase angle is ± 2/3 to obtain the reconstructed three-phase voltage), and the reconstructed three-phase modulation voltage is calculated as follows:

$$\begin{cases} u_{cA1}^{*} = U_{g}\sqrt{1+\left(q\frac{1-D}{2}\right)^{2}-2q\frac{1-D}{2}\cos\left(2\varphi\right)}\cos\left(\omega t-\alpha\right) \\ u_{cA2}^{*} = U_{g}\sqrt{1+\left(q\frac{1-D}{2}\right)^{2}-2q\frac{1-D}{2}\cos\left(2\varphi\right)}\cos\left(\omega t-\frac{2\pi}{3}-\alpha\right) \\ u_{cA3}^{*} = U_{g}\sqrt{1+\left(q\frac{1-D}{2}\right)^{2}-2q\frac{1-D}{2}\cos\left(2\varphi\right)}\cos\left(\omega t+\frac{2\pi}{3}-\alpha\right) \end{cases} \tag{6}$$

In order to reduce the amplitude of the modulation voltage of the phase A, the reconstructed three-phase voltage as a whole (including the pre-compensation voltage and the adaptive zero-sequence voltage) is decomposed into positive- and negative-sequence components, and their maximums and minimums are found as harmonic zero-sequence voltages for another compensation. Th desired harmonic zero-sequence voltage to be compensated is expressed as:

$$u_{0HA} = -\frac{\max\left\{u_{cA1}^{*}, u_{cA2}^{*}, u_{cA3}^{*}\right\} + \min\left\{u_{cA1}^{*}, u_{cA2}^{*}, u_{cA3}^{*}\right\}}{2} \tag{7}$$

Here, $\max\{u_{cA1}^{*}, u_{cB1}^{*}, u_{cC1}^{*}\}$ indicates the maximums of $u_{cA1}^{*}$, $u_{cB1}^{*}$, and $u_{cC1}^{*}$, and $\min\{u_{cA1}^{*}, u_{cB1}^{*}, u_{cC1}^{*}\}$ indicates the minimums of $u_{cA1}^{*}$, $u_{cB1}^{*}$, and $u_{cC1}^{*}$.

**In** summary, when the interphase short circuit fault occurs between the phases B and C, the proposed control method compensates for the adaptive zero-sequence voltage $u_{0FA}$ as well as the zero-sequence voltage $u_{0HA}$. At the same time, compensating for the fundamental-frequency adaptive zero-sequence voltage $u_{0FA}$ and the harmonic zero-sequence voltage $u_{0HA}$ can further reduce the amplitude of the modulation voltage of the phase A, thereby reducing the range of active power backflow. With the control method proposed in the present invention, when the interphase short circuit fault occurs between the phases B and C, the final three-phase modulation voltages $u_{cAH}^{*}$, $u_{cBH}^{*}$ and $u_{cCH}^{*}$ are expressed as:

$$\begin{cases} u_{cAH}^{*} = u_{cA}^{*} + u_{0HA} = u_{cA} + u_{0FA} + u_{0HA} \\ u_{cBH}^{*} = u_{cB}^{*} + u_{0HA} = u_{cB} + u_{0FA} + u_{0HA} \\ u_{cCH}^{*} = u_{cC}^{*} + u_{0HA} = u_{cC} + u_{0FA} + u_{0HA} \end{cases} \tag{8}$$

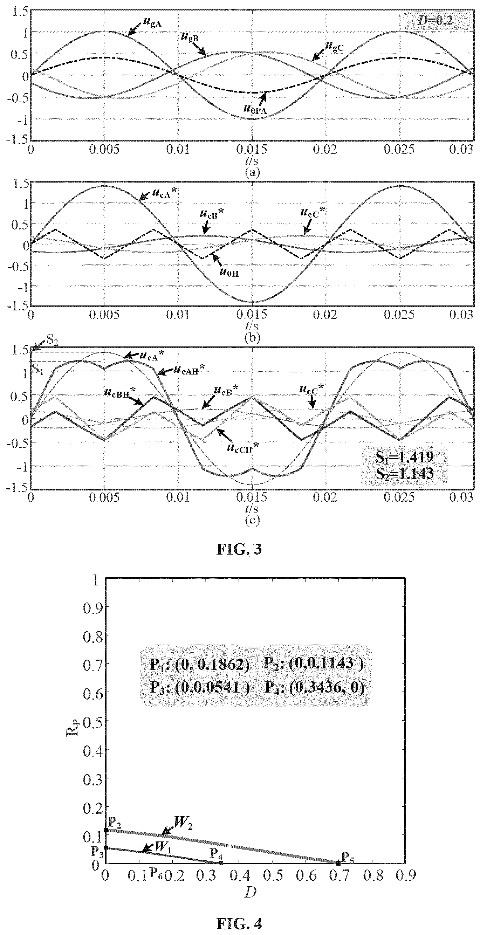

Taking the sag depth D=0.2 as an example, the waveforms of the three-phase grid voltages $u_{gA}$, $u_{gB}$, and $u_{gC}$ after the sag, as well as the desired adaptive fundamental-frequency zero-sequence voltage $u_{0FA}$ to be compensated are shown in FIG. 3(a). It should be noted that all variables in FIG. 3 are represented with per-unit value, i.e., dividing an actual value by the rated value $U_{g}$ of the grid voltage. In this scenario. after compensating for the adaptive zero-sequence voltage $u_{0FA}$, the waveforms of the three-phase modulation voltages $u_{cA}^{*}$, $u_{cB}^{*}$, and $u_{cC}^{*}$ are shown in FIG. 3(b). It can be seen that the amplitude of the modulation voltage of the phase A $u_{cA}^{*}$ increases significantly. To reduce the amplitude of $u_{cA1}^{*}$, the harmonic zero-sequence voltage $u_{0H}$ as shown in FIG. 3(b) is compensated. After compensating $u_{cA}^{*}$, $u_{cB}^{*}$, and $u_{cC}^{*}$ with $u_{0HA}$, the three-phase modulation voltages are denoted as $u_{cAH}^{*}$, $u_{cBH}^{*}$, and $u_{cCH}^{*}$, respectively. It can be seen that the amplitude of $u_{cAH}^{*}$ is significantly lower than that of $u_{cA}^{*}$.

Embodiment 2

According to the cyclic symmetry of the three phases, if an interphase short circuit fault occurs between the phases A and C, the desired adaptive zero-sequence voltage $u_{0FB}$ to be injected is:

$$u_{0FB} = q\frac{1-D}{2}U_g cos(\omega t + 2\varphi - \frac{5\pi}{3})$$ (9).

In this operating scenario, after compensating for the adaptive zero-sequence voltage $u_{0FB}$, the modulation voltage of the phase B is:

$$u_{cB}^* = U_g\sqrt{1+\left(q\frac{1-D}{2}\right)^2 - 2q\frac{1-D}{2}\cos(2\varphi)}\cos\left(\omega t - \frac{2\pi}{3} - \alpha\right)$$ (10).

The modulation voltage of the phase B is expanded to symmetric three-phase voltages as below:

$$\begin{cases} u_{cB1}^* = U_g\sqrt{1+\left(q\frac{1-D}{2}\right)^2 - 2q\frac{1-D}{2}\cos(2\varphi)}\cos\left(\omega t - \frac{2\pi}{3} - \alpha\right) \\[3mm] u_{cB2}^* = U_g\sqrt{1+\left(q\frac{1-D}{2}\right)^2 - 2q\frac{1-D}{2}\cos(2\varphi)}\cos\left(\omega t - \frac{4\pi}{3} - \alpha\right) \\[3mm] u_{cB3}^* = U_g\sqrt{1+\left(q\frac{1-D}{2}\right)^2 - 2q\frac{1-D}{2}\cos(2\varphi)}\cos\left(\omega t - \alpha\right) \end{cases}$$ (11).

In order to reduce the amplitude of the modulation voltage of the phase B, the desired harmonic zero-sequence voltage to be compensated may be calculated as:

$$u_{0HB} = -\frac{\max\left\{u_{cB1}^*, u_{cB2}^*, u_{cB3}^*\right\} + \min\left\{u_{cB1}^*, u_{cB2}^*, u_{cB3}^*\right\}}{2}$$ (12).

In summary, when an interphase short circuit fault occurs between the phases A and C, the proposed control method compensates for the adaptive zero-sequence voltage $u_{0FB}$ as well as the zero-sequence voltage $u_{0HB}$. With the control method proposed in the present invention, when the interphase short circuit fault occurs between the phases A and C, the final three-phase modulation voltages $u_{cAH}^*$, $u_{cBH}^*$ and $u_{cCH}^*$ are expressed as:

$$\begin{cases} u_{cAH}^{*} = u_{cA}^{*} + u_{0HB} = u_{cA} + u_{0FB} + u_{0HB} \\ u_{cBH}^{*} = u_{cB}^{*} + u_{0HB} = u_{cB} + u_{0FB} + u_{0HB} \\ u_{cCH}^{*} = u_{cC}^{*} + u_{0HB} = u_{cC} + u_{0FB} + u_{0HB} \end{cases} \qquad (13).$$

Embodiment 3

According to the cyclic symmetry of the three phases, if an interphase short circuit fault occurs between the phases A and B, the desired adaptive zero-sequence voltage $u_{0FC}$ to be injected is:

$$u_{0FC} = q\frac{1-D}{2}U_g cos(\omega t + 2\varphi - \frac{\pi}{3}) \qquad (14).$$

In this operating scenario, after compensating for the adaptive zero-sequence voltage $u_{0FC}$, the modulation voltage of the phase C is:

$$u_{cC}^{*} = U_g\sqrt{1+\left(q\frac{1-D}{2}\right)^2 - 2q\frac{1-D}{2}\cos(2\varphi)}\cos\left(\omega t + \frac{2\pi}{3} - \alpha\right) \qquad (15).$$

The modulation voltage of the phase C is expanded to symmetric three-phase voltages as below:

$$\begin{cases} u_{cC1}^{*} = U_g\sqrt{1+\left(q\frac{1-D}{2}\right)^2 - 2q\frac{1-D}{2}\cos(2\varphi)}\cos\left(\omega t + \frac{2\pi}{3} - \alpha\right) \\ u_{cC2}^{*} = U_g\sqrt{1+\left(q\frac{1-D}{2}\right)^2 - 2q\frac{1-D}{2}\cos(2\varphi)}\cos\left(\omega t - \alpha\right) \\ u_{cC3}^{*} = U_g\sqrt{1+\left(q\frac{1-D}{2}\right)^2 - 2q\frac{1-D}{2}\cos(2\varphi)}\cos\left(\omega t - \frac{2\pi}{3} - \alpha\right) \end{cases} \qquad (16).$$

In order to reduce the amplitude of the modulation voltage of the phase C, the desired harmonic zero-sequence voltage to be compensated may be calculated as:

$$u_{0HC} = -\frac{\max\left\{u_{cC1}^{*}, u_{cC2}^{*}, u_{cC3}^{*}\right\} + \min\left\{u_{cC1}^{*}, u_{cC2}^{*}, u_{cC3}^{*}\right\}}{2} \qquad (17).$$

In summary, when an interphase short circuit fault occurs between the phases A and B, the proposed control method compensates for the adaptive zero-sequence voltage $u_{0FC}$ as well as the zero-sequence voltage $u_{0HC}$. With the control method proposed in the present invention, when the interphase short circuit fault occurs between the phases A and B, the final three-phase modulation voltages $u_{cAH}^*$, $u_{cBH}^*$ and $u_{cCH}^*$ are expressed as:

$$\begin{cases} u_{cAH}^* = u_{cA}^* + u_{0HC} = u_{cA} + u_{0FC} + u_{0HC} \\ u_{cBH}^* = u_{cB}^* + u_{0HC} = u_{cB} + u_{0FC} + u_{0HC} \\ u_{cCH}^* = u_{cC}^* + u_{0HC} = u_{cC} + u_{0FC} + u_{0HC} \end{cases} \quad (18).$$

The present invention combines the adaptive zero-sequence voltage compensation strategy and the maximum-minimum harmonic zero-sequence voltage compensation strategy to further reduce the range of active power backflow produced when the interphase short circuit between two phases occurs in the power grid, and the active power backflow can be considered to be completely suppressed under certain conditions, allowing the inverter to meet the requirements of low voltage ride-through in the grid connection guidelines and operate stably in the case of an asymmetric fault in the power grid, such that the inverter can be prevented from being shut down and disconnected from the grid due to the overvoltage protection triggered by the active power backflow present in the case of the asymmetric fault in the power grid.

As shown in FIG. 4, a region defined by a curve $W_2$ and coordinate axes RP and D is the range of active power backflow produced when the existing adaptive zero-sequence voltage compensation strategy is used; and a region defined by a curve $W_1$ and the coordinate axes RP and D is the range of active power backflow produced when the control strategy of the present invention is used. Compared with the adaptive zero-sequence voltage compensation strategy proposed in the existing literature, the control method of the present invention can reduce the range of active power backflow by about 75%.

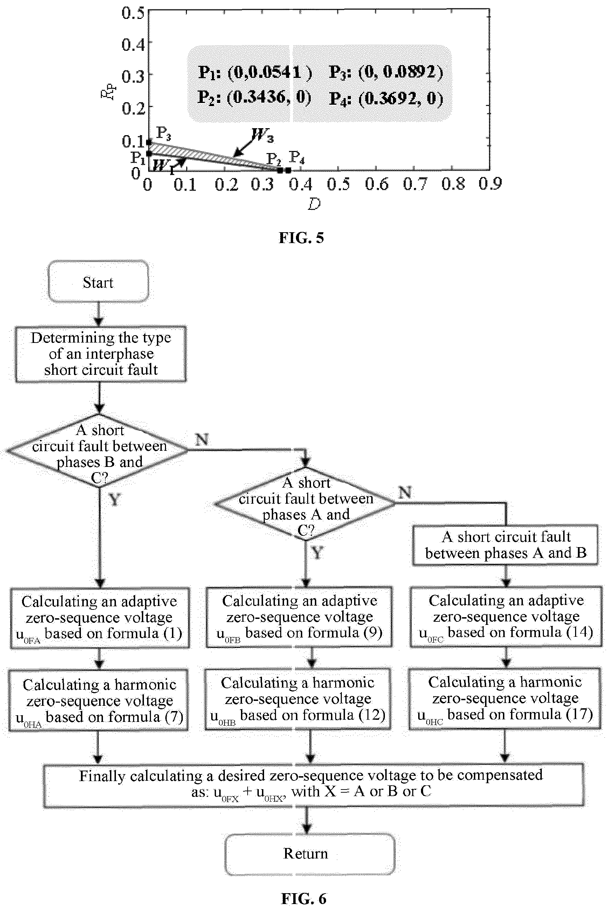

As shown in FIG. 5, a region defined by a curve $W_3$ and the coordinate axes RP and D is the range of active power backflow provided when the positive- and negative-sequence maximum-minimum harmonic zero-sequence voltage injection method of the existing cascaded converter is used; and a region defined by the curve $W_1$ and the coordinate axes RP and D is the range of active power backflow produced when the control strategy of the present invention is used. In contrast to the compensation strategy proposed in the existing literature, although the adaptive fundamental-frequency zero-sequence voltage and the positive- and negative-sequence maximum-minimum harmonic zero-sequence voltages are injected in these two strategies, the timing for injecting the adaptive fundamental-frequency zero-sequence voltage and the calculation methods for the positive- and negative-sequence maximum-minimum harmonic zero-sequence voltages vary greatly in these two strategies. Such a combined compensation strategy in the prior art is not to compensate for the adaptive fundamental-frequency zero-sequence voltage in the inverter first, nor to reconstruct the three-phase modulation voltage, but to calculate the adaptive fundamental-frequency zero-sequence voltage and the positive- and negative-sequence maximum-minimum harmonic zero-sequence voltages respectively, and then inject them into the inverter, involving cumbersome steps. The control method of the present invention is simpler with high processing efficiency, can significantly reduce a region with the active power backflow, and is more applicable to conditions with higher voltage sag depth and lower system output power.

In summary, a flowchart of zero-sequence voltage compensation according to the present invention is shown in FIG. 6, with a specific processes including:

determining the type of an interphase short circuit fault; in the case of a short circuit fault between phases B and C, calculating an adaptive zero-sequence voltage $u_{0FA}$ based on formula (1), and then calculating a harmonic zero-sequence voltage $u_{0HA}$ based on formula (7); in the case of a short circuit fault between phases A and C, calculating an adaptive zero-sequence voltage $u_{0FB}$ based on formula (9), and then calculating a harmonic zero-sequence voltage $u_{OHB}$ based on formula (12); in the case of a short circuit fault between phases B and A, calculating an adaptive zero-sequence voltage $u_{OFC}$ based on formula (14), and then calculating a harmonic zero-sequence voltage $u_{OHC}$ based on formula (17); and finally calculating a desired zero-sequence voltage to be compensated as follows: $u_{0FX} + u_{0HX}$, with X = A or B or C.

For those skilled in the art, various other corresponding variations and modifications can be made according to the technical solutions and concepts described above, and all these variations and modifications should fall within the protection scope of the claims of the present invention. The scope of protection is therefore only limited by the appended claims.

**Claims**

1. A control method for a cascaded H-bridge medium-voltage direct-mounted photovoltaic inverter, comprising the steps of:

   S1, determining two phases of a power grid where a short circuit occurs;

   S2, calculating a desired adaptive zero-sequence voltage $u_{0FA}$ of a phase A to be compensated by means of an adaptive zero-sequence voltage compensation strategy, wherein the phase A refers to a phase of three phases of the power grid where no short circuit occurs, and the other two phases comprise a phase B and a phase C, between which an interphase short circuit occurs, wherein the adaptive zero-sequence voltage is calculated based on a voltage sag depth (D) caused by the interphase short circuit;

   S3, compensating for the adaptive zero-sequence voltage $u_{0FA}$, then calculating an amplitude of a modulation voltage of the phase A, and calculating the modulation voltage of the phase A based on the amplitude of the modulation voltage of the phase A;

   S4, expanding the modulation voltage of the phase A to symmetrical three-phase voltages based on the modulation voltage of the phase A;

   S5, calculating a harmonic zero-sequence voltage $u_{0HA}$ by means of a maximum-minimum harmonic zero-sequence voltage compensation strategy, wherein the zero-sequence compensated modulation voltage of phase A is expanded to symmetric three-phase voltages and decomposed into positive- and negative-sequence components of which their maximums and minimums are found as harmonic zero-sequence voltages and applied in said maximum-minimum harmonic zero-sequence compensation; and

   S6, acquiring three-phase modulation voltages $u_{cAH}{}^*$, $u_{cBH}{}^*$ and $u_{cCH}{}^*$ based on the adaptive zero-sequence voltage $u_{0FA}$ and the harmonic zero-sequence voltage $u_{0HA}$, to suppress active power backflow;

   **characterized in that**:
   calculation formulas for the three-phase modulation voltages $u_{cAH}{}^*$, $u_{cBH}{}^*$ and $u_{cCH}{}^*$ are:

$$\begin{cases} u^*_{cAH} = u^*_{cA} + u_{0HA} = u_{cA} + u_{0FA} + u_{0HA} \\ u^*_{cBH} = u^*_{cB} + u_{0HA} = u_{cB} + u_{0FA} + u_{0HA} \\ u^*_{cCH} = u^*_{cC} + u_{0HA} = u_{cC} + u_{0FA} + u_{0HA} \end{cases}$$

   wherein $u_{cA}$, $u_{cB}$, and $u_{cC}$ indicate three-phase modulation voltages before the adaptive zero-sequence voltage is compensated.

2. The control method for the cascaded H-bridge medium-voltage direct-mounted photovoltaic inverter according to claim 1, wherein a calculation formula for calculating the adaptive zero-sequence voltage $u_{0FA}$ of the phase A is specifically:

$$u_{0FA} = q \frac{1-D}{2} U_g cos(\omega t + 2\varphi - \pi)$$

   wherein q indicates an adaptive compensation coefficient, D indicates the sag depth of a voltage of the power grid, $U_g$ indicates a rated amplitude of a phase voltage of the power grid, $\varphi$ indicates a power factor angle of the inverter during LVRT, $\omega$ indicates an angular frequency of the voltage of the power grid, and t indicates time.

3. The control method for the cascaded H-bridge medium-voltage direct-mounted photovoltaic inverter according to claim 2, wherein a calculation formula for the amplitude of the modulation voltage of the phase A is specifically:

$$U_{cAM} = U_g \sqrt{1 + \left( q \frac{1-D}{2} \right)^2 - 2q \frac{1-D}{2} \cos(2\varphi)}$$

wherein $U_{cAM}$ indicates the amplitude of the modulation voltage of the phase A.

4. The control method for the cascaded H-bridge medium-voltage direct-mounted photovoltaic inverter according to claim 3, wherein a calculation formula for calculating the modulation voltage of the phase A is specifically:

$$u_{cA}^* = U_{cAM} \cos(\omega t - \alpha_A) = U_g \sqrt{1 + \left( q \frac{1-D}{2} \right)^2 - 2q \frac{1-D}{2} \cos(2\varphi)} \cos(\omega t - \alpha)$$

wherein $u_{cA}$ indicates the modulation voltage of the phase A, and $\alpha_A$ indicates an included angle $\alpha$ between a modulation voltage phasor $U_{cA}^*$ of the phase A and a voltage phasor $U_{gA}$ of the phase A after the adaptive zero-sequence voltage is compensated.

5. The control method for the cascaded H-bridge medium-voltage direct-mounted photovoltaic inverter according to claim 4, wherein a calculation formula for $\alpha$ is:

$$\alpha \approx \arccos\left( \frac{U_g^2 + U_{cAM}^2 - U_{0FM}^2}{2U_g U_{cAM}} \right) = \arccos\left( \frac{2 - q(1-D)\cos(2\varphi)}{\sqrt{4 + q^2(1-D)^2 - 4q(1-D)\cos(2\varphi)}} \right)$$

wherein $U_{0FM}$ indicates an amplitude of the adaptive zero-sequence voltage $u_{0FA}$, and

$$U_{0FM} = q \frac{1-D}{2} U_g$$

6. The control method for the cascaded H-bridge medium-voltage direct-mounted photovoltaic inverter according to claim 5, wherein calculation formulas for expanding the modulation voltage of the phase A to the symmetric three-phase voltages are:

$$\begin{cases} u_{cA1}^* = U_g \sqrt{1 + \left( q \frac{1-D}{2} \right)^2 - 2q \frac{1-D}{2} \cos(2\varphi)} \cos(\omega t - \alpha) \\[2ex] u_{cA2}^* = U_g \sqrt{1 + \left( q \frac{1-D}{2} \right)^2 - 2q \frac{1-D}{2} \cos(2\varphi)} \cos\left( \omega t - \frac{2\pi}{3} - \alpha \right) \\[2ex] u_{cA3}^* = U_g \sqrt{1 + \left( q \frac{1-D}{2} \right)^2 - 2q \frac{1-D}{2} \cos(2\varphi)} \cos\left( \omega t + \frac{2\pi}{3} - \alpha \right) \end{cases}$$

7. The control method for the cascaded H-bridge medium-voltage direct-mounted photovoltaic inverter according to claim 6, wherein a calculation formula for calculating the harmonic zero-sequence voltage $u_{0HA}$ is:

$$u_{0\mathrm{HA}} = -\frac{\max\left\{u_{\mathrm{cA1}}^{*}, u_{\mathrm{cA2}}^{*}, u_{\mathrm{cA3}}^{*}\right\} + \min\left\{u_{\mathrm{cA1}}^{*}, u_{\mathrm{cA2}}^{*}, u_{\mathrm{cA3}}^{*}\right\}}{2},$$

wherein $\max\{u_{\mathrm{cA1}}^{*}, u_{\mathrm{cA2}}^{*}, u_{\mathrm{cA3}}^{*}\}$ indicates maximums of $u_{\mathrm{cA1}}^{*}$, $u_{\mathrm{cA2}}^{*}$, and $u_{\mathrm{cA3}}^{*}$, and $\min\{u_{\mathrm{cA1}}^{*}, u_{\mathrm{cA2}}^{*}, u_{\mathrm{cA3}}^{*}\}$ indicates minimums of $u_{\mathrm{cA1}}^{*}$, $u_{\mathrm{cA2}}^{*}$, and $u_{\mathrm{cA3}}^{*}$.

**Patentansprüche**

1. Steuerungsverfahren für einen kaskadierten direktmontierten H-Brücken-Mittelspannungs-Photovoltaik-Wechselrichter, umfassend die Schritte:

   S1, Bestimmen zweier Phasen eines Stromnetzes, in denen ein Kurzschluss auftritt;

   S2, Berechnen einer gewünschten adaptiven Nullsequenzspannung $u_{0\mathrm{FA}}$ einer Phase A, die mittels einer adaptiven Nullsequenzspannungs-Kompensationsstrategie zu kompensieren ist, wobei die Phase A sich auf eine Phase von drei Phasen des Stromnetzes bezieht, in der kein Kurzschluss auftritt, und die anderen beiden Phasen eine Phase B und eine Phase C umfassen, zwischen denen ein Zwischenphasenkurzschluss auftritt, wobei die adaptive Nullsequenzspannung basierend auf einer durch den Zwischenphasenkurzschluss verursachten Spannungseinbruchstiefe (D) berechnet wird;

   S3, Kompensieren der adaptiven Nullsequenzspannung $u_{0\mathrm{FA}}$, anschließend Berechnen einer Amplitude einer Modulationsspannung der Phase A und Berechnen der Modulationsspannung der Phase A basierend auf der Amplitude der Modulationsspannung der Phase A;

   S4, Erweitern der Modulationsspannung der Phase A zu symmetrischen Dreiphasenspannungen basierend auf der Modulationsspannung der Phase A;

   S5, Berechnen einer harmonischen Nullsequenzspannung $u_{0\mathrm{HA}}$ mittels einer Kompensationsstrategie für die maximale und minimale harmonische Nullsequenzspannung, wobei die nullsequenzkompensierte Modulationsspannung der Phase A zu symmetrischen Dreiphasenspannungen erweitert und in ihre positive und negative Sequenzkomponenten zerlegt wird, deren Maxima und Minima als harmonische Nullsequenzspannung ermittelt und in der Kompensation der maximalen und minimalen harmonischen Nullsequenzspannung angewendet werden; und

   S6, Erfassen der dreiphasigen Modulationsspannungen $u_{\mathrm{cAH}}^{*}$, $u_{\mathrm{cBH}}^{*}$ und $u_{\mathrm{cCH}}^{*}$ basierend auf der adaptiven Nullsequenzspannung $u_{0\mathrm{FA}}$ und der harmonischen Nullsequenzspannung $u_{0\mathrm{HA}}$, um den Rückfluss der Wirkleistung zu unterdrücken;

   **dadurch gekennzeichnet, dass**:
   die Berechnungsformeln für die dreiphasigen Modulationsspannungen $u_{\mathrm{cAH}}^{*}$, $u_{\mathrm{cBH}}^{*}$ **und** $u_{\mathrm{cCH}}^{*}$ **sind:**

$$\begin{cases} u_{\mathrm{cAH}}^{*} = u_{\mathrm{cA}}^{*} + u_{0\mathrm{HA}} = u_{\mathrm{cA}} + u_{0\mathrm{FA}} + u_{0\mathrm{HA}} \\ u_{\mathrm{cBH}}^{*} = u_{\mathrm{cB}}^{*} + u_{0\mathrm{HA}} = u_{\mathrm{cB}} + u_{0\mathrm{FA}} + u_{0\mathrm{HA}} \\ u_{\mathrm{cCH}}^{*} = u_{\mathrm{cC}}^{*} + u_{0\mathrm{HA}} = u_{\mathrm{cC}} + u_{0\mathrm{FA}} + u_{0\mathrm{HA}} \end{cases},$$

   wobei $u_{\mathrm{cA}}$, $u_{\mathrm{cB}}$ und $u_{\mathrm{cC}}$ dreiphasige Modulationsspannungen vor der Kompensation der adaptiven Nullsequenzspannung bezeichnen.

2. Steuerungsverfahren für einen kaskadierten direktmontierten H-Brücken-Mittelspannungs-Photovoltaik-Wechselrichter nach Anspruch 1, wobei eine Berechnungsformel zur Berechnung der adaptiven Nullsequenzspannung $u_{0\mathrm{FA}}$ der Phase A spezifisch lautet:

$$u_{0FA} = q\frac{1-D}{2}U_g cos(\omega t + 2\varphi - \pi)$$

,

wobei q einen adaptiven Kompensationskoeffizienten bezeichnet, D die Einbruchstiefe einer Spannung des Stromnetzes bezeichnet, $U_g$ eine Nennamplitude einer Phasenspannung des Stromnetzes bezeichnet, $\varphi$ einen Leistungsfaktorwinkel des Wechselrichters während LVRT bezeichnet, $\omega$ eine Kreisfrequenz der Spannung des Stromnetzes bezeichnet, und t die Zeit bezeichnet.

3. Steuerungsverfahren für einen kaskadierten direktmontierten H-Brücken-Mittelspannungs-Photovoltaik-Wechselrichter nach Anspruch 2, wobei eine Berechnungsformel für die Amplitude der Modulationsspannung der Phase A spezifisch lautet:

$$U_{cAM} = U_g\sqrt{1+\left(q\frac{1-D}{2}\right)^2 - 2q\frac{1-D}{2}\cos(2\varphi)}$$

,

wobei $U_{cAM}$ die Amplitude der Modulationsspannung der Phase A bezeichnet.

4. Steuerungsverfahren für einen kaskadierten direktmontierten H-Brücken-Mittelspannungs-Photovoltaik-Wechselrichter nach Anspruch 3, **dadurch gekennzeichnet, dass** eine Berechnungsformel zur Berechnung der Modulationsspannung der Phase A wie folgt lautet:

$$u_{cA}^* = U_{cAM}\cos(\omega t - \alpha_A) = U_g\sqrt{1+\left(q\frac{1-D}{2}\right)^2 - 2q\frac{1-D}{2}\cos(2\varphi)}\cos(\omega t - \alpha)$$

,

wobei $u_{cA}^*$ die Modulationsspannung der Phase A bezeichnet und $\alpha_A$ einen eingeschlossenen Winkel $\alpha$ zwischen einem Modulationsspannungszeiger $U_{cA}^*$ der Phase A und einem Spannungszeiger $U_{gA}$ der Phase A nach der Kompensation der adaptiven Nullsequenzspannung bezeichnet.

5. Steuerungsverfahren für einen kaskadierten direktmontierten H-Brücken-Mittelspannungs-Photovoltaik-Wechselrichter nach Anspruch 4, **dadurch gekennzeichnet, dass** eine Berechnungsformel für $\alpha$ wie folgt lautet:

$$\alpha \approx \arccos\left(\frac{U_g^2 + U_{cAM}^2 - U_{0FM}^2}{2U_g U_{cAM}}\right) = \arccos\left(\frac{2-q(1-D)\cos(2\varphi)}{\sqrt{4+q^2(1-D)^2 - 4q(1-D)\cos(2\varphi)}}\right)$$

,

wobei $U_{0FM}$ eine Amplitude der adaptiven Nullsequenzspannung $u_{0FA}$ bezeichnet, und

$$U_{0FM} = q\frac{1-D}{2}U_g$$

.

6. Steuerungsverfahren für einen kaskadierten direktmontierten H-Brücken-Mittelspannungs-Photovoltaik-Wechselrichter nach Anspruch 5, **dadurch gekennzeichnet, dass** Berechnungsformeln zur Erweiterung der Modulationsspannung der Phase A zu symmetrische Dreiphasenspannungen wie folgt lauten:

$$\begin{cases} u^*_{cA1} = U_g \sqrt{1 + \left( q\frac{1-D}{2} \right)^2 - 2q\frac{1-D}{2}\cos\left(2\varphi\right)} \cos\left( \omega t - \alpha \right) \\[3mm] u^*_{cA2} = U_g \sqrt{1 + \left( q\frac{1-D}{2} \right)^2 - 2q\frac{1-D}{2}\cos\left(2\varphi\right)} \cos\left( \omega t - \frac{2\pi}{3} - \alpha \right) \\[3mm] u^*_{cA3} = U_g \sqrt{1 + \left( q\frac{1-D}{2} \right)^2 - 2q\frac{1-D}{2}\cos\left(2\varphi\right)} \cos\left( \omega t + \frac{2\pi}{3} - \alpha \right) \end{cases}.$$

**7.** Steuerungsverfahren für einen kaskadierten direktmontierten H-Brücken-Mittelspannungs-Photovoltaik-Wechselrichter nach Anspruch 6, wobei eine Berechnungsformel zur Berechnung der harmonischen Nullsequenzspannung $u_{0HA}$ lautet:

$$u_{0HA} = -\frac{\max\left\{u^*_{cA1}, u^*_{cA2}, u^*_{cA3}\right\} + \min\left\{u^*_{cA1}, u^*_{cA2}, u^*_{cA3}\right\}}{2}.$$

wobei $\max\{u_{cA1}{}^*, u_{cA2}{}^*, u_{cA3}{}^*\}$ die Maxima von $u_{cA1}{}^*$, $u_{cA2}{}^*$ und $u_{cA3}{}^*$ angibt und $\min\{u_{cA1}{}^*, u_{cA2}{}^*, u_{cA3}{}^*\}$ die Minima von $u_{cA1}{}^*$, $u_{cA2}{}^*$ und $u_{cA3}{}^*$ angibt.

## Revendications

**1.** Un procédé de commande pour un onduleur photovoltaïque à moyenne tension à montage direct et à pont en H en cascade, comprenant les étapes suivantes :

S1, déterminer deux phases d'un réseau électrique où un court-circuit se produit ;

S2, calculer une tension de séquence zéro adaptative souhaitée $u_0FA$ d'une phase A à compenser au moyen d'une stratégie de compensation de tension de séquence zéro adaptative, où la phase A fait référence à une phase des trois phases du réseau électrique où aucun court-circuit ne se produit, et les deux autres phases comprennent une phase B et une phase C, entre lesquelles un court-circuit interphasique se produit, où la tension de séquence zéro adaptative est calculée sur la base d'une profondeur d'affaissement de tension (D) causée par le court-circuit interphasique;

S3, compenser la tension de séquence zéro adaptative $u_0FA$, puis calculer une amplitude d'une tension de modulation de la phase A, et calculer la tension de modulation de la phase A sur la base de l'amplitude de la tension de modulation de la phase A ;

S4, développer la tension de modulation de la phase A en tensions triphasées symétriques sur la base de la tension de modulation de la phase A ;

S5, calculer une tension de séquence zéro harmonique $u_0HA$ au moyen d'une stratégie de compensation de tension de séquence zéro harmonique maximum-minimum, où la tension de modulation compensée en séquence zéro de la phase A est développée en tensions triphasées symétriques et décomposée en composantes de séquence positive et négative dont les maximums et minimums sont trouvés comme tension de séquence zéro harmonique et appliqués dans ladite compensation de séquence zéro harmonique maximum-minimum;

S6, acquérir les tensions de modulation triphasées $u_{cAH}{}^*$, $u_{cBH}{}^*$ et $u_{cCH}{}^*$ sur la base de la tension de séquence zéro adaptative $u_0FA$ et de la tension de séquence zéro harmonique $u_0HA$, pour supprimer le reflux de puissance active;

**Caractérisé en ce que** :

les formules de calcul pour les tensions de modulation triphasées $u^*_{cAH}$, $u^*_{cBH}$ et $u^*_{cCH}$ sont :

$$u_{cAH}^* = u_{cA}^* + u_{0HA} = u_{cA} + u_{0FA} + u_{0HA}$$

$$\{u_{cBH}^* = u_{cB}^* + u_{0HA} = u_{cB} + u_{0FA} + u_{0HA}$$

$$u_{cCH}^* = u_{cC}^* + u_{0HA} = u_{cC} + u_{0FA} + u_{0HA}$$

où $u_{cA}$, $u_{cB}$ et $u_{cC}$ indiquent les tensions de modulation triphasées avant que la tension de séquence zéro adaptative ne soit compensée.

2. Le procédé de commande pour l'onduleur photovoltaïque à moyenne tension à montage direct et à pont en H en cascade selon la revendication 1, dans lequel une formule de calcul pour calculer la tension de séquence zéro adaptative $u_{0FA}$ de la phase A est spécifiquement :

$$u_{0\,FA} = q\frac{1-D}{2}U_g\cos\left(\omega t + 2\varphi - \pi\right)$$

où q indique un coefficient de compensation adaptative, D indique la profondeur d'affaissement d'une tension du réseau électrique, $U_g$ indique une amplitude nominale d'une tension de phase du réseau électrique, $\varphi$ indique un angle de facteur de puissance de l'onduleur pendant le LVRT, $\omega$ indique une fréquence angulaire de la tension du réseau électrique, et t indique le temps.

3. Le procédé de commande pour l'onduleur photovoltaïque à moyenne tension à montage direct et à pont en H en cascade selon la revendication 2, dans lequel une formule de calcul pour l'amplitude de la tension de modulation de la phase A est spécifiquement :

$$U_{cAM} = U_g\sqrt{1 + (q\frac{1-D}{2})^2 - 2q\frac{1-D}{2}\cos\left(2\varphi\right)}$$

où $U_{cAM}$ indique l'amplitude de la tension de modulation de la phase A.

4. Le procédé de commande pour l'onduleur photovoltaïque à moyenne tension à montage direct et à pont en H en cascade selon la revendication 3, dans lequel une formule de calcul pour calculer la tension de modulation de la phase A est spécifiquement :

$$u_{cA}^* = U_{cAM}\cos\left(\omega t - \alpha_A\right) = U_g\sqrt{1 + (q\frac{1-D}{2})^2 - 2q\frac{1-D}{2}\cos\left(2\varphi\right)}\cos\left(\omega t - \alpha\right)$$

où $u_{cA}^*$ indique la tension de modulation de la phase A, et $\alpha_A$ indique un angle inclus $\alpha$ entre un phaseur de tension de modulation $U_{cA}$ * de la phase A et un phaseur de tension $U_{gA}$ de la phase A après que la tension de séquence zéro adaptative est compensée.

5. Le procédé de commande pour l'onduleur photovoltaïque à moyenne tension à montage direct et à pont en H en cascade selon la revendication 4, dans lequel une formule de calcul pour $\alpha$ est :

$$\alpha \approx \arccos\left(\frac{U_g^2 + U_{cAM}^2 - U_{0FM}^2}{2U_g U_{cAM}}\right) = \arccos\left(\frac{2 - q(1-D)\cos\left(2\varphi\right)}{\sqrt{4 + q^2(1-D)^2 - 4q(1-D)\cos\left(2\varphi\right)}}\right)$$

où $U_{0FM}$ indique une amplitude de la tension de séquence zéro adaptative $u_{0FA}$, et

$$U_{0FM} = q\frac{1-D}{2}U_g.$$

6. Le procédé de commande pour l'onduleur photovoltaïque à moyenne tension à montage direct et à pont en H en cascade selon la revendication 5, dans lequel les formules de calcul pour développer la tension de modulation de la phase A en tensions triphasées symétriques sont :

$$u_{cA1}^* = U_g\sqrt{1 + (q\frac{1-D}{2})^2 - 2q\frac{1-D}{2}\cos(2\varphi)\cos(\omega t - \alpha)}$$

$$\{u_{cA2}^* = U_g\sqrt{1 + (q\frac{1-D}{2})^2 - 2q\frac{1-D}{2}\cos(2\varphi)\cos(\omega t - \frac{2\pi}{3} - \alpha)}$$

$$u_{cA3}^* = U_g\sqrt{1 + (q\frac{1-D}{2})^2 - 2q\frac{1-D}{2}\cos(2\varphi)\cos(\omega t + \frac{2\pi}{3} - \alpha)}$$

7. Le procédé de commande pour l'onduleur photovoltaïque à moyenne tension à montage direct et à pont en H en cascade selon la revendication 6, dans lequel une formule de calcul pour calculer la tension de séquence zéro harmonique $u_{0HA}$ est :

$$u_{0\,HA} = -\frac{\max\{u_{cA1}^*, u_{cA2}^*, u_{cA3}^*\} + \min\{u_{cA1}^*, u_{cA2}^*, u_{cA3}^*\}}{2}$$

où $\max\{u_{cA1}^*, u_{cA2}^*, u_{cA3}^*\}$ indique les maximums de $u_{cA1}^*, u_{cA2}^*$ et $u_{cA3}^*$, et $\min\{u_{cA1}^*, u_{cA2}^*, u_{cA3}^*\}$ indique les minimums de $u_{cA1}^*, u_{cA2}^*$ et $u_{cA3}^*$.

**FIG. 1**

**FIG. 2**

FIG. 3

FIG. 4

P1: (0,0.0541 )    P3: (0, 0.0892)
P2: (0.3436, 0)    P4: (0.3692, 0)

**FIG. 5**

Start

Determining the type of an interphase short circuit fault

A short circuit fault between phases B and C?

A short circuit fault between phases A and C?

A short circuit fault between phases A and B

Calculating an adaptive zero-sequence voltage $u_{0FA}$ based on formula (1)

Calculating an adaptive zero-sequence voltage $u_{0FB}$ based on formula (9)

Calculating an adaptive zero-sequence voltage $u_{0FC}$ based on formula (14)

Calculating a harmonic zero-sequence voltage $u_{0HA}$ based on formula (7)

Calculating a harmonic zero-sequence voltage $u_{0HB}$ based on formula (12)

Calculating a harmonic zero-sequence voltage $u_{0HC}$ based on formula (17)

Finally calculating a desired zero-sequence voltage to be compensated as: $u_{0FX} + u_{0HX}$, with X = A or B or C

Return

**FIG. 6**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 115360920 A

### Non-patent literature cited in the description

- **T. ZHAO** ; **D. CHEN**. Analysis and suppression of active power backflow of three-phase common dc-bus cascaded H-bridge PV grid-connected inverter during LVRT. *IEEE Journal of Emerging and Selected Topics in Power Electronics*, February 2022, vol. 10 (1), 745-759
- **T. ZHAO** ; **D. CHEN**. Active power backflow control strategy for cascaded photovoltaic solid-state transformer during low voltage ride through. *IEEE Trans. Ind. Electron.*, January 2022, vol. 69 (1), 440-451
- **T. ZHAO** ; **Z. FENG** ; **M. WANG** ; **M. WU** ; **D. CHEN**. An optimized LVRT control strategy of cascaded modular medium-voltage inverter for large-scale PV power plant. *EEE Journal of Emerging and Selected Topics in Power Electronics*, 2022
- Active Power Backflow Suppression Strategy of Cascaded PV Solid-State Transformer Under Interphase Short-Circuit Fault Condition. **ZHAO TAO et al.** IEEE JOURNAL OF EMERGING AND SELECTED TOPICS IN POWER ELECTRONICS. IEEE, 12 January 2023, vol. 11, 2350-2363